(19) Europäisches Patentamt
European Patent Office
Office européen des brevets

(11) **EP 2 983 287 A1**

(12) **EUROPEAN PATENT APPLICATION**

(43) Date of publication:
**10.02.2016 Bulletin 2016/06**

(51) Int Cl.:
**H02N 2/18** (2006.01)

(21) Application number: **14180246.2**

(22) Date of filing: **07.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Ostbayerische Technische Hochschule Regensburg
93049 Regensburg (DE)**

(72) Inventors:
• **Chamonine, Mikhail
93051 Regensburg (DE)**

• **Chashin, Dmitrii
109263 Moskow (RU)**
• **Fetisov, Yury
119361 Moscow (RU)**
• **Kreitmeier, Florian
93491 Stamsried (DE)**

(74) Representative: **Lucke, Andreas
Boehmert & Boehmert
Anwaltspartnerschaft mbB
Patentanwälte Rechtsanwälte
Pettenkoferstrasse 20-22
80336 München (DE)**

(54) **Energy harvester**

(57) Provided is an energy harvester (10) comprising a support member (12) to be exposed to ambient mechanical impulses, a transducer (36), wherein the transducer is arranged such as to permit vibrations of the transducer at a first frequency upon excitation by mechanical impact to thereby convert mechanical energy to electric power, and an impact member (20) for actively or passively providing a mechanical impact to the transducer, wherein one or both of the impact member and the transducer is/are coupled with the support member via a spring mechanism, allowing the impact member and/or the transducer to oscillate with regard to the support member upon exposure of the support member to ambient mechanical impulses, wherein a natural frequency of said oscillation(s) of the impact member and/or the transducer is lower than the first frequency, and wherein the transducer and the impact member are arranged relative to each other such that the impact member and the transducer collide if the amplitude of said oscillation(s) of the impact member and/or the transducer exceeds a threshold value to thereby exert said mechanical impact on the transducer.

Fig. 2a

EP 2 983 287 A1

**Description**

FIELD OF THE INVENTION

The present invention relates to energy harvesters. In particular, the present invention relates to energy harvesters with a transducer converting mechanical energy to electric energy and a mechanical set-up for converting low frequency mechanical impulses to high frequency vibrations of the transducer.

BACKGROUND OF THE INVENTION

Energy harvesters draw electric power from ambient mechanical impulses, such as for example ambient vibrations. Heretofore, transducers such as for example piezoelectric elements comprised in the energy harvesters are exposed to ambient mechanical impulses to thereby stimulate the transducers to vibrate. Provided that the ambient mechanical impulses are strong, occur regularly, and that the vibrations of a transducer are not severely damped, considerable alternating voltages can be produced, which allows supplying a device that is wire-connected to the terminals of the transducer with AC power.

Unfortunately, the frequency of occurrence of ambient mechanical impulses, e.g., the frequency of ambient vibrations, is often low and considerably deviates from the natural frequencies of the transducer, thus preventing resonant vibrations thereof. Hence, the frequency of vibrations of the transducer stimulated by ambient mechanical impulses may be low and the amplitude of said vibrations may be small, so that the AC power output of the transducer is unsatisfactory.

In order to arrive at high frequency, large amplitude vibrations of a transducer stimulated by ambient mechanical impulses with a frequency of occurrence that is low and considerably deviates from the natural frequencies of the transducer, several techniques have been proposed in the art:

- S. Roundy et al: "Improving power output for vibration based energy scavengers " in Pervasive Computing, January-March 2005, pages 28-35, describes a piezoelectric energy harvester comprising a piezoelectric beam that carries an additional weight on its free end for shifting the natural frequency of the beam towards lower frequencies. However, the disclosed technique achieves high efficiency only in a narrow operation region.

- L. Gu et al.: "Impact-driven, frequency up-converting coupled vibration energy harvesting device for low frequency operation " in Smart Mater, Struct. 20 045004, describes a piezoelectric energy harvester with a low frequency resonator that impacts a high frequency energy harvesting resonator, resulting in energy harvesting that occurs predominantly at the system's coupled vibration frequency. Furthermore, said technique is prone to wear due to friction between the low frequency resonator and the high frequency resonator.

- H. Liu et al.: "Investigation of a MEMS piezoelectric energy harvester system with a frequency-widened-bandwidth mechanism introduced by mechanical stoppers" in Smart Mater. Struct. 21 035005, describes a piezoelectric energy harvester, wherein an amplitude at which a free end of a piezoelectric beam of the piezoelectric harvester may oscillate is limited by a stopper, thereby increasing the conversion band-width of the system. However, limiting the oscillations of the piezoelectric beam by a stopper also decreases the power output.

SUMMARY OF THE INVENTION

There is hence a need for a technique that, at the one hand, allows for stimulating high frequency, large amplitude vibrations of a transducer by ambient mechanical impulses with a frequency of occurrence that is low and considerably deviates from the natural frequencies of the transducer and, at the other hand, is efficient and does not suffer from considerable wear.

This object is solved by an energy harvester according to claim 1 and by a method of converting ambient mechanical impulses to vibrations of a vibration member and harvesting said vibrations according to claim 15. Preferred embodiments are disclosed in the dependent claims and the following description.

The energy harvester according to the invention comprises a support member that is to be exposed to ambient mechanical impulses, such as ambient vibrations. The ambient mechanical impulses may, for example, originate from a vibrating machine, a solid structure that is caused to vibrate by traffic passing over the solid structure, an appliance that vibrates in operation, a mobile device that is carried around and is discontinuously accelerated in various directions, or any other machine, structure, or device that emits vibrations or, in more general terms, is suitable for discontinuously accelerating a support member. The term "discontinuously accelerated" or "discontinuous acceleration" as used throughout the description and the claims simply means that an acceleration which remains constant over time does not fall under said term. However, any acceleration that changes over time in regard to value and/or direction is explicitly intended to fall under the term "discontinuously accelerated" or "discontinuous acceleration" as used throughout the description and the claims.

The energy harvester according to the invention further comprises a transducer. The transducer is arranged such as to permit vibrations of the transducer at a first frequency upon excitation by mechanical impact, to thereby convert mechanical energy to electric energy. As used throughout the description and the claims, the term "transducer" is to be understood to encompass any arrangement that is arranged such as to permit vibrations of the transducer at a first frequency upon excitation by mechanical impact and is configured to convert mechanical energy to electric energy. In particular, the transducer may comprise a piezoelectric element comprised of any piezoelectric material, with lead zirconium titanate being one preferred choice. Furthermore, the piezoelectric element may exhibit any modulus of elasticity (Young's modulus) with a modulus of elasticity between $8\times10^9$ N/m$^2$ to $10\times10^{10}$ N/m$^2$ being one preferred choice. It should be understood that the present invention is not limited to the use of piezoelectric transducing elements, since other types of transducers can be used, including but not limited to, electromagnetically-driven devices.

Moreover, the energy harvester according to the invention comprises an impact member for actively or passively providing a mechanical impact to the transducer. One or both of the impact member and the transducer is/are coupled with the support via a spring mechanism, allowing the impact member and/or the transducer to oscillate with regard to the support member upon exposure of the support member to ambient mechanical impulses. The term "oscillate" or "oscillation" as used throughout the description and the claims is to be understood as encompassing any periodic movement around a reference point, be it a one-, two-, or three-dimensional movement. According to the invention, a natural frequency of said oscillation(s) of the impact member and/or the transducer is lower than the first frequency. Furthermore, the transducer and the impact member are arranged relative to each other such that the impact member and the transducer collide if the amplitude of said oscillation(s) of the impact member and/or the transducer exceeds a threshold value to thereby exert said mechanical impact on the transducer. Reference to "passively providing a mechanical impact" indicates that the impact member may be stationary with regard to the support member and that the impact may be caused by the oscillation of the transducer relative to the support member when the amplitude of the oscillation of the transducer exceeds a threshold value.

Accordingly, ambient mechanical impulses having a frequency of occurrence close to the natural frequency of said oscillation(s) of the impact member and/or the transducer will cause resonant oscillation(s) which, in the course of building up, increase the amplitude of said oscillation(s) which causes the impact member and the transducer to collide. The collision excites vibrations of a seismic mass of the transducer at the first frequency. Hence, the present invention allows low frequency ambient mechanical impulses to stimulate high frequency, large amplitude vibrations of the transducer. For example, while said oscillation(s) may exhibit a natural frequency in a range of 1 Hz to 30 Hz, the vibrations of the transducer, caused by the collision of the impact member and the transducer, may exhibit a frequency in a range of 100 Hz to 5000 Hz.

Preferably, the natural frequency of said oscillation(s) differs from an average frequency of occurrence of said ambient mechanical impulses by more than 25 %, preferably by more than 50 % and most preferably by more than 70 %.

Preferably, the transducer has an impact section for providing said mechanical impact upon collision with the impact member. For example, the impact section may comprise a surface that collides with a surface of the impact member if the amplitude of said oscillation(s) of the impact member and/or the transducer exceeds the threshold value. By collision of the surfaces of the impact section and the impact member, a mechanical impact is caused that is intended to excite vibrations of the transducer.

Preferably, the spring mechanism comprises electrically conductive material which is electrically connected to at least one of two electric terminals of the transducer. For example, the spring mechanism may comprise one or two coil springs made of metal wire, preferably stainless steel wire. An electrical connection to a terminal of the transducer, for example by a wire pair, can thus be achieved by connecting the wires to the spring mechanism, i.e., to the coil springs. Hence, the wires are not required to run directly to the terminals. This avoids the damping effect a direct wire connection would have on the oscillation of the transducer and also reduces the risk of wire break from which a direct wire connection may suffer as a result of strain caused by the oscillation of the transducer.

Preferably, the transducer comprises a piezoelectric element, preferably a disc-shaped piezoelectric element. A disc-shaped piezoelectric element is advantageous in that the discshape allows for mounting the disc-shaped piezoelectric element to the transducer by ring- or disc-shaped members. These carrying members may sandwich the periphery of the disc-shaped piezoelectric element. This facilitates arranging the piezoelectric element in a way that permits vibrations of the piezoelectric element at the first frequency with low damping while preserving a rigid mounting which is required for efficiently stimulating vibrations of the piezoelectric element by mechanical impact.

In a preferred embodiment, a weight element of a predetermined mass is mounted to the impact member or to the transducer. Said weight element allows for tuning the natural frequency of said oscillation(s) of the impact member or the transducer with respect to the frequency of occurrence of the ambient mechanical impulses. For example, the natural frequency of said oscillation(s) of the impact member or the transducer may be tuned to be in a region of 1 Hz to 30 Hz, in which ambient excitation frequencies are expected to occur regularly.

In a preferred embodiment, the spring mechanism comprises at least one pin. The at least one pin guides two coil springs that are wrapped around the pin and that sandwich the impact member or the transducer. Accordingly, said oscillation(s) of the impact member or the transducer is/are restricted to a one-dimensional movement along the axis of the pin. This allows for enforcing that the mechanical impact exerted on the transducer is oriented in a preferred direction with regard to stimulation of the vibrations of the transducer. For example, when the transducer comprises a disc-shaped piezoelectric element, the axis of the pin may be directed perpendicular to the upper and lower surface of the piezoelectric element.

Preferably, the first frequency is a natural frequency of vibrations of the piezoelectric element as provided in the transducer. By stimulating the piezoelectric element to vibrations of a frequency that is a natural frequency of the piezoelectric element, conversion efficiency, i.e., the efficiency of converting mechanical energy to electric power, is increased.

Preferably, the natural frequency of said oscillation(s) of the impact member and/or of the transducer is below 100 Hz, and preferably between 1 Hz to 30 Hz. As already stated above with regard to tuning the natural frequency of said oscillation(s) of the impact member and/or of the transducer, a natural frequency of said oscillation(s) of the impact member and/or the transducer below 30 Hz is advantageous in that the natural frequency of said oscillation(s) is in a region in which ambient excitation frequencies are expected to occur regularly. Accordingly, the degree of resonance at which said oscillation(s) are excited by the ambient mechanical impulses is high and, hence, a high power output of the piezoelectric element can be achieved.

In a preferred embodiment, the energy harvester further comprises one or more further impact members arranged in a one-, two-, or three-dimensional pattern around the transducer. Accordingly, mechanical impact is not only produced by oscillations of the transducer in one particular direction. Such an arrangement has the advantage that vibrations may be steadily induced even when a movement of the energy harvester exhibits a predominant direction that changes over time. For example, this may be the case when the energy harvester is mounted to a mobile device that is carried around. In this embodiment, the spring mechanism preferably supports two- or three-dimensional oscillations of the transducer, i.e., oscillations that encompass a displacement in two or three dimensions/directions, for allowing the transducer to collide with each of the further impact members.

Preferably, the impact member and/or the impact section are made of plastic, in particular of a duroplast. The usage of plastic is advantageous in that plastic shows comparatively little wear and has low production costs. Furthermore, noise emission is kept below an acceptable level. If further noise reduction is required, the energy harvester may be housed in a noise absorbing housing. For example, the noise absorbing housing may comprise a noise absorbing material at its inner surface.

In a preferred embodiment, the transducer comprises a housing that is mounted to the spring mechanism. Preferably, the housing is made of plastic. When the transducer is integrated in the housing, the housing may protect, for example, a piezoelectric element comprised by the transducer from collisions with the impact member, thereby avoiding damage to the piezoelectric element and enhancing product life.

In a preferred embodiment, the energy harvester comprises a further transducer integrated in the housing, wherein the further transducer comprises a piezoelectric element that is tiltedly arranged relative to a piezoelectric element comprised in the transducer, preferably by an angle of between 45° to 90°, and most preferably of between 60° to 90°. Such an arrangement is advantageous in that power generation is less dependent upon predominant directions of the ambient mechanical impulses.

The invention further relates to a mobile electric device comprising an energy harvester according to one of the embodiments described above, wherein the energy harvester supplies the mobile electric device with electric power.

The method of converting ambient mechanical impulses to vibrations of a vibration member and harvesting said vibrations according to the invention comprises the steps of:

- exposing a support member of a mechanical set-up to ambient mechanical impulses;
- coupling the first end of a spring member having a first end and a second end and a first spring constant $k_1$ to the support member;
- coupling a collision member to the second end of the spring member;
- limiting the movement of the collision member against the resilience of the spring member by an impact member; and
- harvesting said vibrations induced to a vibration member representing a seismic mass of the collision member having a second spring constant $k_2$ which is greater than the first spring constant $k_1$ by the mechanical impact upon collision of the collision member with the impact member.

The vibration member is a portion of the collision member that is excited to vibrations relative to a portion of the collision member that contacts the impact member upon collision. In this regard, the expression "seismic mass" is intended to encompass any portion of the vibration member that starts to vibrate upon collision while the remaining portions of the collision member do not vibrate, i.e., move continuously with the mean oscillation speed of the collision member relative to the support member. As the second spring constant is greater than the first spring constant, the eigenfrequency of said vibrations may be much higher than the eigenfrequency of the oscillation of the collision member and hence, high frequency vibrations may be excited by low-frequency resonant oscillations.

BRIEF DESCRIPTION OF THE DRAWINGS

Fig. 1      shows a schematic view of an arrangement for converting low frequency ambient mechanical impulses to high frequency vibrations.

Fig. 2a      shows a schematic, cross-sectional view of an energy harvester according to an exemplary embodiment.

Fig. 2b      shows a schematic, cross-sectional view of an energy harvester according to an exemplary embodiment.

Fig. 3      shows a schematic, perspective view of an energy harvester according to an exemplary embodiment.

Fig. 4      shows a power to excitation frequency diagram of an energy harvester according to an exemplary embodiment.

Like elements are denoted by like reference numerals throughout the description and figures.

It is noted that several examples will be provided in the following for purposes of explanation. These examples are not to be construed as limiting the scope of protection of the claims.

DETAILED DESCRIPTION

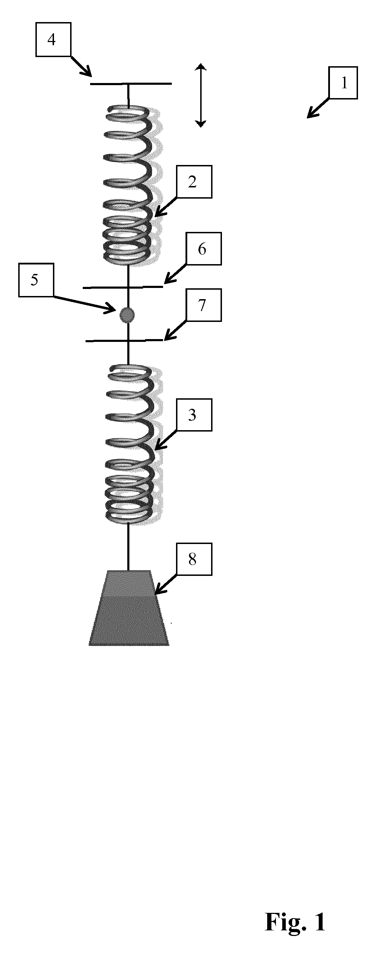

Fig. 1 shows a schematic view of a mechanical set-up 1 for converting low frequency ambient mechanical impulses to high frequency vibrations. The mechanical set-up 1 comprises a spring mechanism with a first spring 2 having a spring constant $k_1$ and a second spring 3 having a spring constant $k_2$. One end of the first spring 2 is coupled to a support member 4 which is exposed to ambient mechanical impulses as indicated by the arrow in Fig. 1. The other end of the first spring 2 is coupled to a collision member 5, i.e., the first spring 2 is sandwiched between the support member 4 and the collision member 5.

The collision member 5 is also coupled to one end of the second spring 3 so that the first spring 2 and the second spring 3 are connected in series. A possible movement of the collision member 5 against the resilience of the first spring 2 excited by the ambient mechanical impulses is restricted by an upper impact member 6 and a lower impact member 7, which are arranged around the collision member 5, the upper impact member 6 and the lower impact member 7 having fixed positions relative to the position of the support member 4.

The other end of the second spring 3 is coupled to a vibration member 8 represented by a seismic mass m. For sake of simplicity but without loss of generality, the mass of the collision member 5 between the first spring 2 and the second spring 3 is assumed to be negligible in comparison with the seismic mass m.

If the upper and lower impact members 6 and 7 were not present, the eigenfrequency $f_0$ of the entire oscillator would be

$$2\pi f_0 = \sqrt{k_1 k_2/(m \cdot (k_1 + k_2))}.$$

If the upper and lower impact members 6 and 7 are present and the collision member 5 impacts on the upper and lower impact members 6 and 7, the second oscillator comprising the second spring 3 with the spring constant $k_2$ and the mass $m$ has the eigenfrequency

$$2\pi f_1 = \sqrt{k_2/m} \ .$$

If $k_2 \gg k_1$,

$$f_0/f_1 \approx \sqrt{k_1/k_2} \ll 1.$$

In the presence of the upper and lower impact members 6 and 7, the movement of the collision member 5, i.e., its displacement in the vertical direction relative to the position of the support member 4 in the absence of ambient mechanical impulses, may be assumed to be a clipped sine function of time t. Contrary to an ideal sine function, the spectrum of the clipped sine function contains many equally spaced components, and their spacing is equal to 1 divided by the period of the waveform. Therefore, transient movement of the collision member 5 in the form of a low-frequency clipped sine function may effectively excite highfrequency mechanical oscillations of the second oscillator, which can be further transduced into electrical energy by a transducer coupled to the vibration member 8, or by replacing the collision member 5 with a transducer, e.g. by means of the piezoelectric effect. If the first oscillator is broadband (e.g., by damping, where the first spring 2 with the spring constant $k_1$ is supplemented by a dashpot element in parallel) its broadband property is transferred to the entire system. It should be understood that Fig. 1 represents a simplified equivalent circuit of the mechanical arrangement and is not limited to the exemplary embodiments described below, since other mechanical oscillating elements, e.g. cantilevers can be used, too.

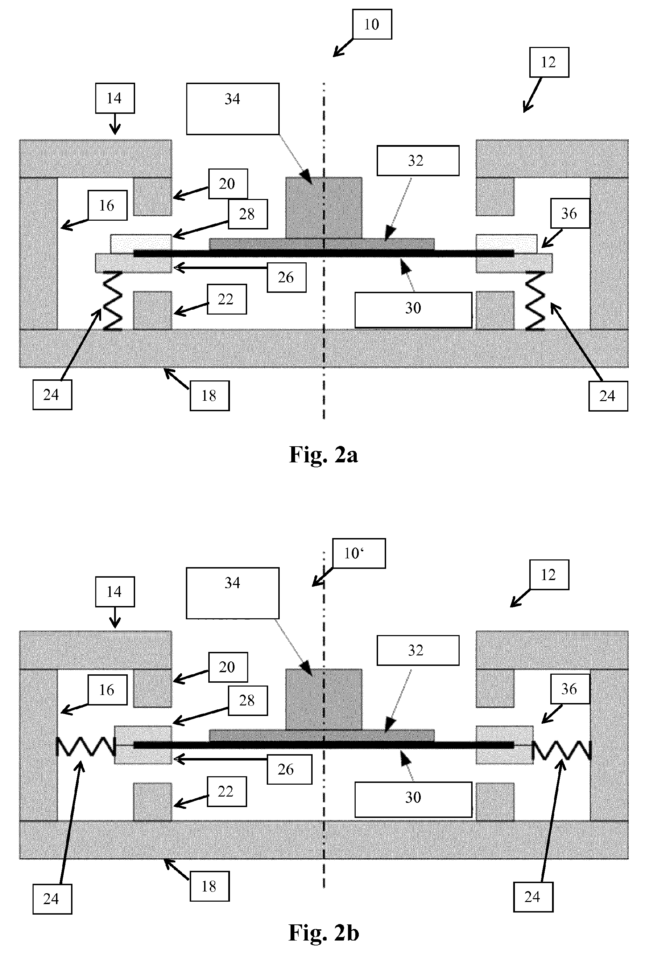

Fig. 2a shows a schematic, cross-sectional view of an energy harvester 10 according to an exemplary embodiment. The energy harvester 10 comprises a support 12 having an upper support member 14, a middle support member 16, and a lower support member 18. The upper, middle, and lower support members 14, 16, and 18 have a ring like shape.

The upper support member 14 and the lower support member 18 are arranged parallel to each other. The middle support member 16 connects the upper support member 14 with the lower support member 18 and is attached to outer circumferential regions of the upper support member 14 and the lower support member 18. In operation, the lower support member 18 may be exposed to ambient mechanical impulses such as ambient vibrations.

The energy harvester 10 further comprises an upper impact member 20 which is attached to an inner circumference region of the ring-shaped upper support member 14 and a lower impact member 22 which is attached to an inner circumference region of the ring-shaped lower support member 18.

The lower support member 18 supports a spring mechanism which is comprised of a plurality of spring coils 24, two of which are illustrated in the cross-sectional view shown in Fig. 2a. One end of each spring 24 is connected to the lower support member 18 while the other end is connected to a lower support ring 26. The lower support ring 26 supports a membrane 30 having a disc-shaped form.. As shown in Fig. 2a, the membrane 30 is sandwiched by the lower support ring 26 and an upper support ring 28 at an outer circumferential region of the membrane 30. To the membrane 30, a piezoelectric element 32 having a disc-shaped form is mounted. As shown in Fig. 2a, the piezoelectric element 32 may carry an additional seismic mass 34.

Comparing the energy harvester 10 shown in Fig. 2a to the mechanical set-up 1 shown in Fig. 1, the following elements correspond to each other. The first spring 2 of the mechanical set-up 1 corresponds to the spring mechanism of the energy harvester 10 comprised of the plurality of spring coils 24. The second spring 3 of the mechanical set-up 1 corresponds to the inherent resilience of the membrane 30 and the piezoelectric element 32 of the energy harvester 10. The support member 4 of the mechanical set-up 1 corresponds to the lower support member 18 of the energy harvester 10. The collision member 5 of the mechanical set-up 1 corresponds to the lower support ring 26 and the upper support ring 28 of the energy harvester 10. The upper and lower impact members 6 and 7 of the mechanical set-up 1 correspond to the upper and lower impact members 20 and 22 of the energy harvester 10. The vibration member 8 of the mechanical set-up 1 corresponds to the portion of the piezoelectric element 32 of the energy harvester 10 that is excited to vibrations by mechanical impact of the lower and upper support rings 26 and 28 on the lower and upper impact members 22 and 20.

Although not shown in Fig. 2a, the piezoelectric element 32 comprises two electric terminals. The lower support ring 26, the upper support ring 28, the membrane 30, the piezoelectric element 32, the two electric terminals of the piezoelectric element 32 and optionally the additional seismic mass 34 form a transducer 36 corresponding to the collision member 5, the second spring 3, and the vibration member 8 of the mechanical set-up 1. The weight of the transducer 36 is tuned to the spring constant of the springs 24 in order to allow for a natural frequency of the oscillations of the transducer 36 to be in a region of up to 30 Hz.

The impact members 20 and 22 limit a displacement of the transducer 36 along a vertical direction. Thus, when the energy harvester 10 is accelerated in vertical direction by an ambient mechanical impulse that impacts on the lower support member 18, the transducer 36 coupled to the lower support member 18 by the springs 24 will start to oscillate in vertical direction. The springs 24 must not be arranged perpendicular to the plane of the piezoelectric element 32 but may also be arranged at other angles relative to the plane of the piezoelectric element 32 , e.g., parallel as shown in the energy harvester 10' of Fig. 2b which differs from the energy harvester 10 of Fig. 2a in that the springs 24 are mounted to the middle support member 16, that the lower and upper support rings 26 and 28 are equal in size, and that each spring 24 is attached to the lower and upper support rings 26 and 28. The only limitation for the arrangement of the springs 24 is that it must allow for mechanical movement of the transducer 36 in vertical direction.

In case the ambient mechanical impulse is strong enough or a multitude of ambient mechanical impulses occur with a frequency of occurrence of the impulses, e.g., a frequency of ambient vibrations, that is close to a natural frequency of the transducer spring mechanism system, the amplitude of the oscillations of the transducer 36 will build up until the upper or lower support ring 28 or 26 collides with the upper or lower impact member 20 or 22. Hence, the upper surface of the upper support ring 28 and the lower surface of the lower support ring 26 form impact regions. The impact regions may be made of hard plastic or metal.

In case of a collision of impact member 20, 22 and impact region, a mechanical impact is exerted upon the transducer 36 which excites vibrations of the piezoelectric element 32. These vibrations of the piezoelectric element 32 are converted to alternating piezo-voltages which can be used for providing AC power to a device.

Furthermore, as the springs 24 allow for three-dimensional oscillations of the piezoelectric element 32, the lower support ring 26 of the energy harvester 10 may collide with the middle support member 16 in case of ambient mechanical impulses in horizontal direction, with the middle support member 16 acting as an impact member 20, 22.

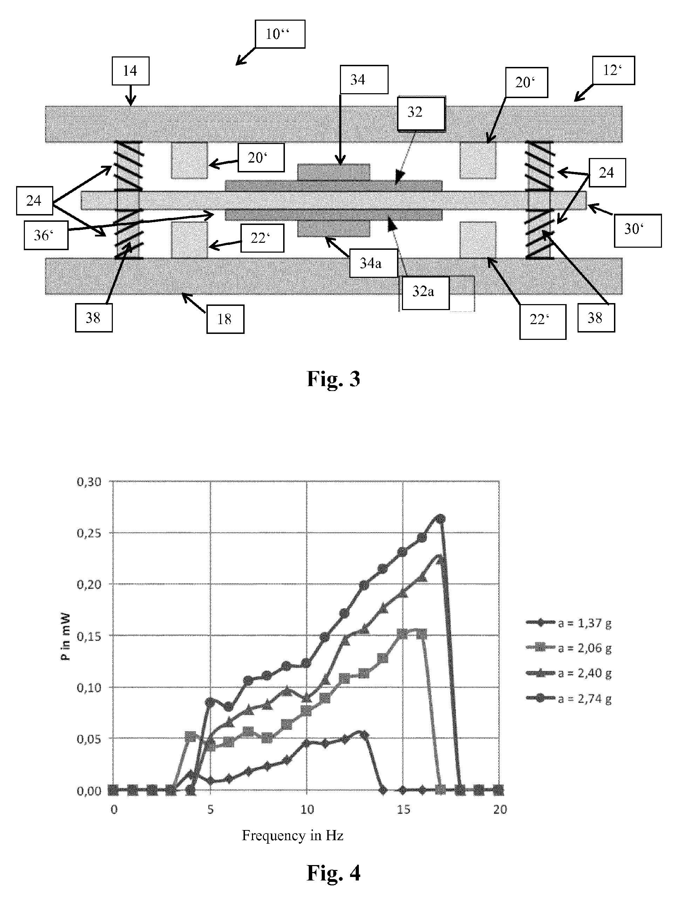

Fig. 3 shows a schematic, perspective view of an energy harvester 10" according to an exemplary embodiment. The energy harvester 10" is similar in form and functionality to the energy harvesters 10 and 10' shown in Figs. 2a and 2b.

However, instead of being connected by the middle support member 16, the lower and upper support members 18 and 14 of the support 12' of the energy harvester 10" are connected by a plurality of pins 38. As shown in Fig. 3, the spring coils 24 are wrapped around the pins 38 and sandwich the transducer 36'. The transducer 36' comprises a disc-shaped membrane 30' which carries piezoelectric elements 32 and 32a on both sides. As shown in Fig. 3, a seismic mass 34 and 34a may be mounted to each piezoelectric element 32 and 32a.

The pins 38 run through holes in the membrane 30' and thus provide a linear bearing for the transducer 36', restricting oscillation(s) of the transducer 36' along the vertical direction, i.e., perpendicular to the plane of the piezoelectric elements 32 and 32a.

Instead of ring-shaped upper and lower impact members 20 and 22 as comprised in the energy harvesters 10 and 10', the energy harvester 10" comprises a plurality of column-shaped upper and lower impact members 20' and 22' which are attached to the upper and lower support member 14 and 18, respectively. The impact members 20' and 22' are equally distributed along a circumferential direction of the ring-shaped upper and lower support members 14 and 18, respectively.

Although not shown, the membrane 30' may comprise protruding portions on each side, wherein the protruding portions of the upper side of the membrane 30' and the upper impact members 20', and the protruding portions of the lower side of the membrane 30' and the lower impact members 22', respectively, may be arranged to come into contact with each other, when the transducer 36' oscillates along a vertical direction. In particular, the protruding portions may be equally spaced around the circumference of the disc-shaped membrane 30' to correspond to the impact members 20', 22'.

The piezoelectric elements 32 and 32a in Fig. 3 can be electrically polarized in the same (e.g. vertically from bottom to top) or in different (e.g. one - from bottom to top, another one-from top to bottom, or from left to right) directions and can be electrically connected either in series or parallel. This serves to increase the efficiency of piezoelectric transduction.

As an alternative to the embodiments described with reference to Figs. 2a, 2b and 3, said embodiments may be amended by replacing the disc-shaped piezoelectric element(s) 32 and 32a by ring-shaped piezoelectric element(s), wherein the additional seismic mass(es) 34 and 34a may be mounted to the membrane 30, 30', wherein an inner edge of the ring-shaped piezoelectric element(s) surrounds the additional seismic mass(es) 34 and 34a. As a further alternative, the membrane 30, 30' could be spared and the piezoelectric element(s) 32, 32a would take the place of the membrane 30, 30'.

Fig. 4 shows a power to excitation frequency diagram of the energy harvester 10 according to the exemplary embodiment shown in Fig. 2a[1]. For the measurements, the disc-shaped piezoelectric element 34 was mounted to a metallic membrane 30.

The diagram shows the power produced for different excitation frequencies that were used to excite oscillations of the piezoelectric element 32 comprised in the transducer 36. The four graphs show the electrical power produced in the load resistance of 8 kΩ in dependence upon the magnitude of ambient vibrations. Each graph is designated by an index "a" which indicates the magnitude of the ambient vibrations to which the lower support member 18 has been exposed. More particularly, the index "a" indicates the root mean square of the acceleration, measured in multiples of the acceleration of gravity g, to which the lower support member 18 is subjected to when being exposed to the vibrations. As shown in Fig. 4, stronger vibrations or an increase in vibration frequency will typically cause more power output as more mechanical energy is fed to the energy harvester 10.

As can be recognized from Fig. 4, the energy harvester 10 provides considerable output power over a wide region of low excitation frequencies what hitherto has not been achieved by energy harvesters. The lower (~ 4 Hz) and upper (~ 17 Hz) limiting frequencies are determined by the band width of the entire mechanical arrangement and the geometrical positions of the impact members 20 and 22. The growth of the electrical power $P$ with the growing excitation frequency $f$ can be at least partially attributed to the fact that with increasing frequency $f$ the transducer 36 strikes the impact members 20 and 22 more often.

[1] The measurements were made by Mr. Alexander Zistler.

LIST OF REFERENCE SIGNS:

| 1 | Mechanical set-up |
|---|---|
| 2 | Spring member |
| 3 | Spring member |
| 4 | Support member |
| 5 | Collision member |
| 6 | Impact member |
| 7 | Impact member |
| 8 | Vibration member |
| 10, 10', 10" | Energy harvester |
| 12, 12' | Support |
| 14 | Support member |
| 16 | Support member |
| 18 | Support member |
| 20, 20' | Impact member |
| 22, 22' | Impact member |
| 24 | Spring |
| 26 | Support ring |
| 28 | Support ring |
| 30, 30' | Membrane |
| 32, 32a | Piezoelectric element |
| 34, 34a | Seismic mass |
| 36, 36' | Transducer |
| 38 | Pin |

**Claims**

1. An energy harvester (10, 10', 10"), comprising:

   - a support member (18) to be exposed to ambient mechanical impulses,
   - a transducer (36, 36'), wherein the transducer (36, 36') is arranged such as to permit vibrations of the transducer (36, 36') at a first frequency upon excitation by mechanical impact to thereby convert mechanical energy to electric power, and
- an impact member (20, 22, 20', 22') for actively or passively providing a mechanical impact to the transducer (36, 36'),

wherein one or both of the impact member (20, 22, 20', 22') and the transducer (36, 36') is/are coupled with the support member (18) via a spring mechanism, allowing the impact member (20, 22, 20', 22') and/or the transducer (36, 36') to oscillate with regard to the support member (18) upon exposure of the support member (18) to ambient mechanical impulses,
wherein a natural frequency of said oscillation(s) of the impact member (20, 22, 20', 22') and/or the transducer (36, 36') is lower than the first frequency, and wherein the transducer (36, 36') and the impact member (20, 22, 20', 22') are arranged relative to each other such that the impact member (20, 22, 20', 22') and the transducer (36, 36') collide if the amplitude of said oscillation(s) of the impact member (20, 22, 20', 22') and/or the transducer (36, 36') exceeds a threshold value to thereby exert said mechanical impact on the transducer (36, 36').

2. An energy harvester (10, 10', 10") according to claim 1, wherein the natural frequency of the oscillation(s) differs from an average frequency of occurrence of said ambient mechanical impulses by more than 25 %, preferably by more than 50 % and most preferably by more than 70 %.

3. An energy harvester (10, 10', 10") according to one of the preceding claims, wherein the transducer (36, 36') has an impact section for providing said mechanical impact upon collision with the impact member (20, 22, 20', 22').

4. An energy harvester (10, 10', 10") according to one of the preceding claims, wherein the spring mechanism comprises electrically conductive material which is electrically connected to at least one of two electric terminals of the transducer (36, 36').

5. An energy harvester (10, 10', 10") according to one of the preceding claims, wherein the transducer (36, 36') comprises a piezoelectric element (32, 32a), preferably a disc-shaped piezoelectric element (32, 32a).

6. An energy harvester (10, 10', 10") according to one of the preceding claims, wherein a weight element of a predetermined mass is mounted to the impact member (20, 22, 20', 22') or to the transducer (36, 36').

7. An energy harvester (10', 10") according to one of the preceding claims, wherein the spring mechanism comprises at least one pin (38), wherein the at least one pin (38) guides two coil springs (24) that are wrapped around the pin (38) and that sandwich the impact member (20, 22, 20', 22') or the transducer (36, 36').

8. An energy harvester (10, 10', 10") according to one of claims 5 to 7, wherein the first frequency is a natural frequency of vibrations of the piezoelectric element (32, 32a) as provided in the transducer (36, 36').

9. An energy harvester (10, 10', 10") according to one of the preceding claims, wherein the natural frequency of said oscillation(s) of the impact member (20, 22, 20', 22') and/or of the transducer (36, 36') is below 30 Hz.

10. An energy harvester (10, 10', 10") according to one of the preceding claims, further comprising one or more further impact members (20, 22, 20', 22') arranged in a one-, two-, or three-dimensional pattern around the transducer (36, 36').

11. An energy harvester (10, 10') according to one of the preceding claims, wherein the spring mechanism supports two- or three-dimensional oscillations of the transducer (36).

12. An energy harvester (10, 10', 10") according to one of claims 3 to 11, wherein the impact member (20, 22, 20', 22') and/or the impact section are made of plastic.

13. An energy harvester (10, 10', 10") according to one of the preceding claims, wherein the transducer (36, 36') comprises a housing that is mounted to the spring mechanism, wherein the housing is preferably made of plastic and wherein the energy harvester (10, 10') preferably comprises a further transducer (36, 36') integrated in the housing, wherein the further transducer comprises a piezoelectric element that is tiltedly arranged relative to a piezoelectric element (32, 32a) comprised in the transducer (36, 36'), preferably by an angle of between 45° to 90°, and most preferably of between 60° to 90°.

14. A mobile electric device comprising an energy harvester (10, 10') according to one of the preceding claims, wherein the energy harvester (10, 10') supplies the mobile electric device with electric power.

15. A method of converting ambient mechanical impulses to vibrations of a vibration member (8) and har-

**EP 2 983 287 A1**

vesting said vibrations, the method comprising the steps of:

- exposing a support member (4) of a mechanical set-up (1) to ambient mechanical impulses;
- coupling the first end of a spring member (2) having a first end and a second end and a first spring constant $k_1$ to the support member (4);
- coupling a collision member (5) to the second end of the spring member (2);
- limiting the movement of the collision member (5) against the resilience of the spring member (2) by an impact member (6, 7); and
- harvesting said vibrations induced to a vibration member (8) representing a seismic mass of the collision member (5) having a second spring constant $k_2$ which is greater than the first spring constant $k_1$ by the mechanical impact upon collision of the collision member (5) with the impact member (6, 7).

4

1

2

6

5

7

3

8

**Fig. 1**

**Fig. 2a**

**Fig. 2b**

**Fig. 3**

Frequency in Hz

**Fig. 4**

**EUROPEAN SEARCH REPORT**

Application Number

EP 14 18 0246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 100 189 A1 (USC CO LTD [JP]) 16 May 2001 (2001-05-16)<br><br>* paragraphs [0006] - [0024] *<br>* paragraphs [0033] - [0041], [0047]; figures 1,5 * | 1-3,5,6, 8,10,14, 15 | INV.<br>H02N2/18 |
| A | US 2007/152511 A1 (SAKAI YASUHIRO [JP] ET AL) 5 July 2007 (2007-07-05)<br>* paragraphs [0031] - [0037]; figure 4 * | 1,15 | |
| A | JP 2006 254586 A (USC CORP; EIGHT CONSULTANTS CO LTD) 21 September 2006 (2006-09-21)<br>* abstract; figure 1 * | 1,15 | |
| X,D | HUICONG LIU ET AL: "Paper;Investigation of a MEMS piezoelectric energy harvester system with a frequency-widened-bandwidth mechanism introduced by mechanical stoppers;Investigation of a MEMS piezoelectric energy harvester system with a frequency-widened-bandwidth mechanism introduced by mechanical stoppers", SMART MATERIALS AND STRUCTURES, IOP PUBLISHING LTD., BRISTOL, GB, vol. 21, no. 3, 2 February 2012 (2012-02-02), page 35005, XP020219733, ISSN: 0964-1726, DOI: 10.1088/0964-1726/21/3/035005 * page 2, right-hand column, last paragraph - page 3, left-hand column, paragraph 1; figure 1; table 1 * * page 8, left-hand column, last paragraph - page 10, left-hand column, last paragraph; figures 9-11 * | 1-3,5,6, 8,10,14, 15 | TECHNICAL FIELDS SEARCHED (IPC)<br><br>H02N |

-/--

The present search report has been drawn up for all claims

| Place of search | Date of completion of the search | Examiner |
|---|---|---|
| Munich | 9 January 2015 | Steiner, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 18 0246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LEI GU ET AL: "Impact-driven, frequency up-converting coupled vibration energy harvesting device for low frequency operation;Impact-driven, frequency up-converting coupled vibration energy harvesting device for low frequency operation", SMART MATERIALS AND STRUCTURES, IOP PUBLISHING LTD., BRISTOL, GB, vol. 20, no. 4, 8 March 2011 (2011-03-08), page 45004, XP020188962, ISSN: 0964-1726, DOI: 10.1088/0964-1726/20/4/045004 * page 2, left-hand column, last paragraph - page 3, left-hand column, paragraph 1; figure 1c * | 1-3,5,6, 8-10,14, 15 | |

-----

TECHNICAL FIELDS
SEARCHED      (IPC)

The present search report has been drawn up for all claims

| Place of search | Date of completion of the search | Examiner |
|---|---|---|
| Munich | 9 January 2015 | Steiner, Markus |

EPO FORM 1503 03.82 (P04C01)

**ANNEX TO THE EUROPEAN SEARCH REPORT
ON EUROPEAN PATENT APPLICATION NO.** EP 14 18 0246

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2015

| Patent document cited in search report | | Publication date | Patent family member(s) | | Publication date |
|---|---|---|---|---|---|
| EP 1100189 | A1 | 16-05-2001 | AU | 1306201 A | 30-05-2001 |
| | | | CA | 2391142 A1 | 25-05-2001 |
| | | | CN | 1409889 A | 09-04-2003 |
| | | | CN | 1681140 A | 12-10-2005 |
| | | | EP | 1100189 A1 | 16-05-2001 |
| | | | US | 6411016 B1 | 25-06-2002 |
| | | | WO | 0137417 A1 | 25-05-2001 |
| US 2007152511 | A1 | 05-07-2007 | JP | 2007202381 A | 09-08-2007 |
| | | | US | 2007152511 A1 | 05-07-2007 |
| JP 2006254586 | A | 21-09-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. ROUNDY et al.** Improving power output for vibration based energy scavengers. *Pervasive Computing,* January 2005, 28-35
- **L. GU et al.** Impact-driven, frequency up-converting coupled vibration energy harvesting device for low frequency operation. *Smart Mater, Struct.,* vol. 20, 045004

- **H. LIU et al.** Investigation of a MEMS piezoelectric energy harvester system with a frequency-widened-bandwidth mechanism introduced by mechanical stoppers. *Smart Mater. Struct.,* vol. 21, 035005